# EUROPEAN PATENT SPECIFICATION

(11) **EP 3 913 328 B1**
(45) Date of publication and mention of the grant of the patent: **20.12.2023**
(21) Application number: 20744572.7
(22) Date of filing: 20.01.2020
(51) Int. Cl.: G01C 21/00, G01C 21/16, G01C 21/20, G01C 21/28, G01S 5/00, G01S 5/02, G01S 5/14

(54) **VEHICLE POSITIONING SYSTEM AND METHOD, AND VEHICLE**
FAHRZEUGPOSITIONIERUNGSSYSTEM UND -VERFAHREN UND FAHRZEUG
PROCÉDÉ ET SYSTÈME DE POSITIONNEMENT DE VÉHICULE, ET VÉHICULE

(30) Priority: 25.01.2019 CN 201910073979
(43) Date of publication of application: 24.11.2021
(73) Proprietor: Great Wall Motor Company Limited, Baoding, Hebei 071000 (CN)
(72) Inventor: GAO, Chonggui, Baoding, Hebei 071000 (CN); AN, Shumiao, Baoding, Hebei 071000 (CN); ZHANG, Kai, Baoding, Hebei 071000 (CN); ZHANG, Ying, Baoding, Hebei 071000 (CN); DU, Kang, Baoding, Hebei 071000 (CN); ZHANG, Zhaoqiang, Baoding, Hebei 071000 (CN)
(74) Representative: Klunker IP Patentanwälte PartG mbB
(86) International application number: PCT/CN2020/073241
(87) International publication number: WO 2020/151663

(56) References cited:
- CN-A- 104 613 982
- CN-A- 105 953 798
- CN-A- 105 953 798
- CN-A- 107 976 195
- CN-A- 108 036 784
- CN-A- 108 613 671
- CN-A- 109 000 660
- CN-A- 109 115 211
- US-A1- 2010 312 428
- CASHBAUGH JASMINE ET AL: "Quadrotor testbed development and preliminary results", 2015 IEEE AEROSPACE CONFERENCE, IEEE, 7 March 2015 (2015-03-07), pages 1-12, XP033173622, DOI: 10.1109/AERO.2015.7118909 ISBN: 978-1-4799-5379-0 [retrieved on 2015-06-05]

## Description

### FIELD

The present application relates to the technical field of automatic control, and in particular to a vehicle positioning device, a vehicle positioning system and a vehicle positioning method, and a vehicle.

### BACKGROUND

Nowadays, positioning of automatic driving outdoors may be performed based on a real time dynamic kinematic (RTK) method, a global navigation positioning system (GNSS), and the like. However, in an indoor parking lot, accurate positioning cannot be performed based on the methods performed outdoors due to the loss of GPS signals. According to the conventional indoor positioning solution, only coordinates can be determined, and the heading angle cannot be measured. However, the heading angle is important for the positioning and control of automatic driving.
US 2010/312428 A1 describes a global navigation satellite system and a gyroscope control system for vehicle steering. Two antennas arranged at a fixed spacing are utilized for calculating the heading angle of a vehicle The GNSS attitude obtained from the antennas may be combined with gyroscopes.
CN 107 976 195 A discloses a robot having a plurality of labels that are used to determine the position and the orientation of the robot. The positioning and navigation of the robot utilizes a wireless UWB technology without external equipment in case the position coordinate data is reliable. In case the position data is not reliable, the orientation of the robot may be determined by means of an electronic compass or gyroscope
Cashbaugh Jasmine et al. describe in "Quadrotor testbed development and preliminary results", 2015 IEEE Aerospace conference, IEEE, 7 March 2015, pages 1 - 12, an aerial vehicle with radio frequency identification (RFID) tags that are used to calculate the robot's center.
CN 107 976 195 A describes a navigation method of a mobile robot, in particular for automated guided transport vehicles, wherein distance data between USB electronic tags and UWB base stations is determined.
CN 105 953798 A also relates to the positioning and navigation of mobile robots. The positioning and navigation may involve a partial map of the surrounding environment of the mobile robot that is created using simultaneous localization and mapping.

### SUMMARY

In view of this, a vehicle positioning system is provided according to the present disclosure to perform accurate measurement on a heading angle.

In order to achieve the above objective, the technical solutions as defined by the appended independent claims are provided.

A vehicle positioning device, operating based on multiple signal transmitting units, is provided. The vehicle positioning device includes two or more communication units and a processing unit. The communication units are arranged on a vehicle and configured to receive signals from the multiple signal transmitting units. The two or more communication units are spaced apart. The processing unit is configured to determine, for each of the two or more communication units, coordinates of the communication unit based on time instants at which the communication unit receives the signals from the signal transmitting units and coordinates of the signal transmitting units, and determine a heading angle of the vehicle based on the coordinates of each of the communication units.

Further, the determining, for each of the two or more communication units, coordinates of the communication unit based on time instants at which the communication unit receives the signals from the signal transmitting units and coordinates of the signal transmitting units is performed by: for each of the communication units, determining distances between the communication unit and the signal transmitting units based on the time instants at which the communication unit receives the signals from the signal transmitting units, and determining the coordinates of the communication unit based on the coordinates of the signal transmitting units and the distances between the communication unit and the signal transmitting units.

Further, the vehicle positioning device further includes a gyroscope. The gyroscope is configured to detect a heading angle of the vehicle as a first heading angle. The processing unit is further configured to calculate, based on a driving curve of the vehicle, a heading angle of the vehicle as a second heading angle; and determine a final heading angle of the vehicle using an autoregressive algorithm based on the first heading angle, the second heading angle, and the heading angle of the vehicle determined based on the coordinates of each of the communication devices.

Further, each of the communication units includes a communication tag and an antenna.

Further, the processing unit is further configured to calculate coordinates of the vehicle to obtain a position of the vehicle based on coordinates of any one of the two or more communication units and a position at which the communication unit is arranged on the vehicle.

Further, the signals from the multiple signal transmitting units cover at least one of a region around a turn, a region around a corner, a region around a transparent glass, and a region having feature points not sufficient for a vehicle-mounted positioning device to correctly position the vehicle.

The vehicle positioning device according to the present disclosure has the following advantages.

In the vehicle positioning device operating based on multiple signal transmitting units according to the present disclosure, two or more communication units receive signals from the multiple signal transmitting units; for each of the communication units, coordinates of the communication unit is determined based on time instants at which the communication unit receives the signals from the signal transmitting units; and a heading angle of the vehicle is determined based on the coordinates of each of the communication units. With the vehicle positioning device operating based on multiple signal transmitting units according to the present disclosure, a heading angle can be accurately measured indoors or in a region where GPS signals cannot be obtained.

According to the inventive concept, a vehicle positioning system is provided to perform accurate measurement on a heading angle in a whole process.

In order to achieve the above objective, the technical solution as defined by the appended claim 1 is provided.

A vehicle positioning system is provided. The vehicle positioning system includes: the vehicle positioning device, a vehicle-mounted positioning device, and a master control device. The vehicle-mounted positioning device is configured to collect information of a position and/or a heading angle of a vehicle. The master control device is configured to: calculate the position and/or the heading angle of the vehicle by using the vehicle positioning device in a case that two or more communication units have received signals from multiple signal transmitting devices, and calculate the position and/or the heading angle of the vehicle based on the information related to the position and/or the heading angle of the vehicle collected by the vehicle-mounted positioning device in a case that any one of two or more communication units has not received a signal from any one of multiple signal transmitting devices.

Further, the vehicle positioning device is further configured to capture a current scene image. The master control device is further configured to: determine whether a pixel gray value of the current scene image is within a predetermined range before the two or more communication units receive the signals from the multiple signal transmitting devices; in a case that the pixel gray value of the current scene image is not within the predetermined range, control the two or more communication units to receive the signals from the multiple signal transmitting units to calculate the position and/or the heading angle of the vehicle by using the vehicle positioning device; and in a case that the pixel gray value of the current scene image is within the predetermined range, calculate the position and/or the heading angle of the vehicle based on the information of the position and/or the heading angle of the vehicle collected by the vehicle-mounted positioning device.

Further, the vehicle-mounted positioning device includes a camera and at least one of a lidar, a millimeter wave radar, an ultrasonic radar, a vehicle speed sensor, a wheel angular velocity sensor and an inertial sensor.

Compared with the conventional technology, the vehicle positioning system according to the present disclosure has the following advantages.

The vehicle positioning system according to the present disclosure includes the vehicle positioning device described above and a vehicle-mounted positioning device. In a case that the vehicle positioning device receives signals from multiple signal transmitting devices, the position and/or the heading angle of the vehicle is calculated by using the vehicle positioning device. In a case that the vehicle positioning device does not completely receive signals from multiple signal transmitting devices, the position and/or the heading angle of the vehicle is calculated by using the vehicle-mounted positioning device. With the vehicle positioning system according to the present disclosure, it can be ensured that the position and/or the heading angle of the vehicle can be calculated in a case of a failure of the vehicle positioning device or in a region without multiple signal transmitting devices, and the position and/or the heading angle of the vehicle can be determined by the vehicle positioning device in a case that the position and/or the heading angle of the vehicle cannot be accurately determined by the vehicle-mounted positioning device, thereby performing accurate measurement on the heading angle in a whole process.

According to the inventive concept, a vehicle positioning method is provided to perform accurate measurement on a heading angle in a whole process.

In order to achieve the above objective, the technical solution as defined by the appended claim 6 is provided.

A vehicle positioning method, performed based on multiple signal transmitting units and two or more communication units, is provided. The vehicle positioning method includes: receiving, by the two or more communication units, signals from the multiple signal transmitting units, where the two or more communication units are spaced apart; determining, for each of the two or more communication units, coordinates of the communication unit based on time instants at which the communication unit receives the signals from the signal transmitting units and coordinates of the signal transmitting units; and determining a heading angle of the vehicle based on the coordinates of the each of the communication units.

Further, the determining, for each of the two or more communication units, coordinates of the communication unit based on time instants at which the communication unit receives the signals from the multiple signal transmitting units and coordinates of the signal transmitting units includes: for each of the two or more communication units, determining distances between the communication unit and the signal transmitting units based on the time instants at which the communication unit receives the signals from the signal transmitting units; and determining the coordinates of the communication unit based on the coordinates of the signal transmitting units and the distances between the communication unit and the signal transmitting units.

Further, the vehicle positioning method is performed based on a gyroscope. The vehicle positioning method includes: detecting, by the gyroscope, a heading angle of the vehicle as a first heading angle; calculating, based on a driving curve of the vehicle, a heading angle of the vehicle as a second heading angle; and determining a final heading angle of the vehicle using an autoregressive algorithm based on the first heading angle, the second heading angle, and the heading angle of the vehicle determined based on the coordinates of each of the communication devices.

Further, the vehicle positioning method further includes: calculating coordinates of the vehicle to obtain a position of the vehicle based on coordinates of any one of the two or more communication units and a position at which the communication unit is arranged on the vehicle.

Further, the signals from the multiple signal transmitting units cover at least one of a region around a turn, a region around a corner, a region around a transparent glass, and a region having feature points not sufficient for a vehicle-mounted positioning device to correctly position the vehicle.

Compared with the conventional technology, the vehicle positioning method has the same advantages as the vehicle positioning device, which are not repeated herein.

According to the present disclosure, a vehicle is provided to perform accurate measurement on a heading angle.

In order to achieve the above objective, the following technical solutions are provided according to the present disclosure.

A vehicle is provided. The vehicle includes the vehicle positioning device or the vehicle positioning system.

Compared with the conventional technology, the vehicle has the same advantages as the vehicle positioning device or the vehicle positioning system, which are not repeated herein. Other features and advantages of the present disclosure are to be described in detail in the following embodiments.

### BRIEF DESCRIPTION OF THE DRAWINGS

The accompanying drawings forming a part of the present disclosure are used to provide a further understanding of the present disclosure. Exemplary embodiments of the present disclosure and descriptions thereof are used to explain the present disclosure rather than constitute an undue limitation on the present disclosure. In the drawings:
Figure 1 is a schematic structural diagram of a vehicle positioning device according to an embodiment of the present disclosure;
Figure 2 is a schematic diagram of an operation process of a vehicle positioning device according to an embodiment of the present disclosure;
Figure 3 is a schematic diagram showing an arrangement of a vehicle positioning device according to an embodiment of the present disclosure;
Figure 4 is a schematic structural diagram of a vehicle positioning system according to an embodiment of the present disclosure;
Figure 5A is a schematic structural diagram of a vehicle-mounted positioning device according to an embodiment of the present disclosure;
Figure 5B is a schematic diagram showing arrangement positions of vehicle-mounted cameras according to an embodiment of the present disclosure;
Figure 6 is a schematic diagram of an operation process of a vehicle positioning system according to an embodiment of the present disclosure;
Figure 7 is a schematic diagram of an operation process of a vehicle positioning system according to another embodiment of the present disclosure;
Figure 8 is a schematic diagram of an operation process of a vehicle positioning system according to another embodiment of the present disclosure; and
Figure 9 is a block diagram showing an operation of a vehicle positioning system according to an embodiment of the present disclosure.

Reference numerals are listed as follows:

| | | | |
|---|---|---|---|
| 1 | Communication unit | 2 | Processing unit |
| 31 | Camera | 32 | Lidar |
| 33 | Millimeter wave radar | 34 | Ultrasonic radar |
| 35 | Vehicle speed sensor | 36 | Wheel angular velocity sensor |
| 37 | Inertial sensor | 311 | Surround view camera |
| 312 | Front view camera | 4 | Vehicle positioning device |
| 5 | Vehicle-mounted positioning device | 6 | Master control device |

### DETAILED DESCRIPTION OF EMBODIMENTS

The present disclosure is described in detail below with reference to the drawings and in conjunction with the embodiments.

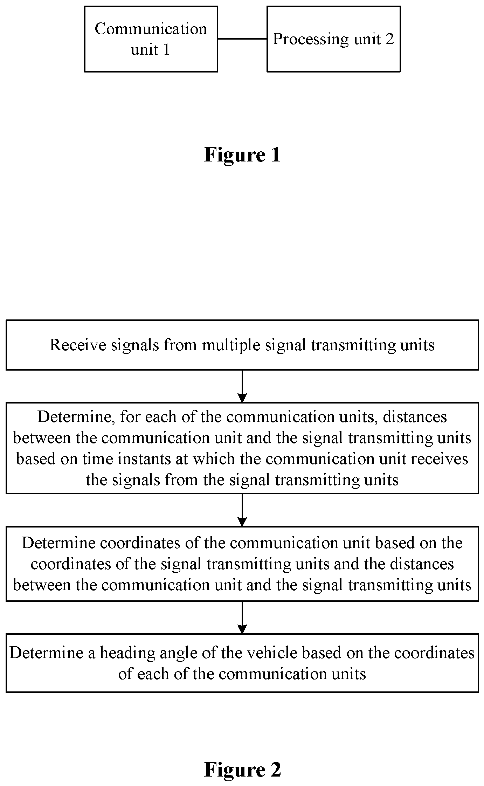

Figure 1 is a schematic structural diagram of a vehicle positioning device according to an embodiment of the present disclosure. As shown in Figure 1, the vehicle positioning device operates based on multiple signal transmitting units. The vehicle positioning device includes two or more communication units 1 and a processing unit 2. The communication units 1 are arranged on a vehicle, and configured to receive signals from the multiple signal transmitting units. The two or more communication units 1 are spaced apart. The processing unit 2 is configured to determine, for each of the two or more communication units 1, coordinates of the communication unit 1 based on time instants at which the communication unit 1 receives the signals from the signal transmitting units and coordinates of the signal transmitting units; and determine a heading angle of the vehicle based on the coordinates of each of the communication units 1.

In the embodiment of the present disclosure, the multiple signal transmitting units (not shown in Figure 1) may be base stations. In order to accurately determine the position and/or the heading angle of the vehicle, four signal transmitting units are arranged. The four signal transmitting units may form a square region. The two or more communication units 1 receive signals from the multiple signal transmitting units. For each of the communication units1, the processing unit 2 may determine distances between the communication unit 1 and the multiple signal transmitting units based on time instants at which the communication unit 1 receives the signals from the signal transmitting units. Then, the processing unit 2 may determine coordinates of each of the communication units 1 based on the coordinates of the signal transmitting units. Since the communication units 1 are spaced apart, the distances between the communication units 1 are predetermined, and the positions at which the communication units 1 are arranged are predetermined, it is easy to obtain the orientation of the vehicle and thereby obtain the heading angle of the vehicle.

For the position of the vehicle, coordinates of a midpoint of a rear axle of the vehicle is generally determined as coordinates of the vehicle. Therefore, a distance between any one of the communication units 1 and the midpoint of the rear axle of the vehicle may be obtained based on the position at which the communication unit 1 is arranged on the vehicle, and the coordinates of the midpoint of the rear axle of the vehicle is calculated based on the coordinates of the communication unit 1, thereby obtaining the coordinates of the vehicle.

Figure 2 is a schematic diagram of an operation process of a vehicle positioning device according to an embodiment of the present disclosure. As shown in Figure 2, the communication units receive signals from the multiple signal transmitting units. For each of the communication units 1, distances between the communication unit 1 and the signal transmitting units are determined based on the time instants at which the communication unit receives the signals from the signal transmitting units, and then the coordinates of the communication unit 1 is determined based on the coordinates of the signal transmitting units and the distances between the communication unit 1 and the signal transmitting units. Finally, the heading angle of the vehicle is determined based on the coordinates of each of the communication units 1.

The heading angle of the vehicle calculated above may be not accurate enough since the heading angle is obtained in one manner. Based on a large number of actual operations and experiments, it is found that the heading angle has a deviation roughly ranging from 1.53° to 3.82 °. In this regard, in the present disclosure, the heading angle of the vehicle may be calculated in the above manner with a preset very high refresh rate, then multiple heading angles of the vehicle are obtained in a same state (position and heading angle) of the vehicle, and then an accurate heading angle is obtained by performing an average calculation on the multiple heading angles.

In addition, in an embodiment of the present disclosure, a gyroscope is arranged to detect the heading angle of the vehicle as a first heading angle. With the gyroscope, a relative heading angle with an accuracy of up to 0.1° is obtained, and a cumulative error is generated. The processing unit 2 fits a driving curve equation based on a driving curve of the vehicle, and performs a deviation calculation to obtain a heading angle of the vehicle as a second heading angle. Based on the first heading angle, the second heading angle, and the heading angle of the vehicle determined based on the coordinates of each of the communication devices (or the heading angle after average calculation), a final heading angle of the vehicle is determined using an autoregressive algorithm, such as Kalman filtering. The final heading angle of the vehicle is accurate without generating a cumulative error, thereby calibrating the problem of the cumulative error generated by using the gyroscope.

In addition, after the coordinates of the vehicle and the heading angle of the vehicle are calculated, it is required to output the coordinates of the vehicle and the heading angle of the vehicle. According to an embodiment of the present disclosure, a message format for final output is provided. For example, frame 1: 0000 0000, where first four bytes represents an x-coordinate and last four bytes represents a y-coordinate (a positioning result); and frame 2: 0000 0000, where first four bytes represents a horizontal angle, and last four bytes represents a pitch angle (a result of the heading angle), which is not limited to this.

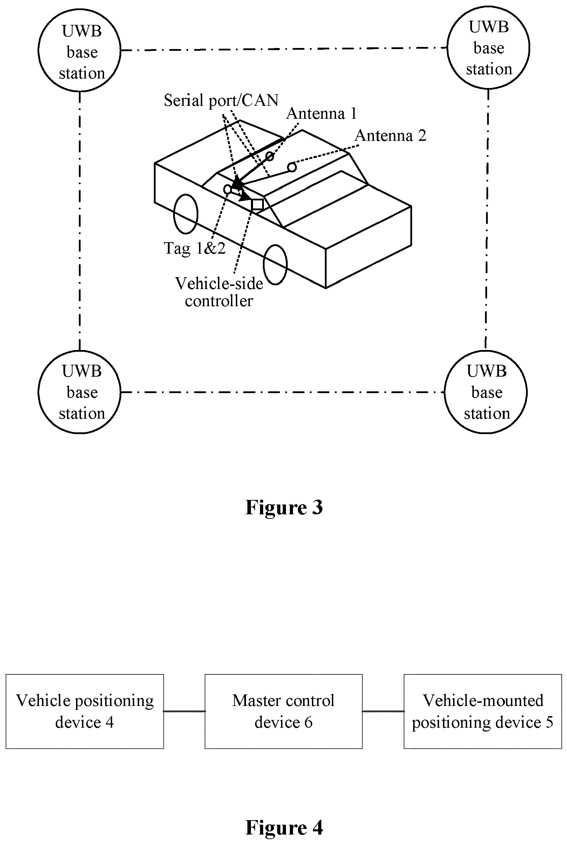

Figure 3 is a schematic diagram showing an arrangement of a vehicle positioning device according to an embodiment of the present disclosure. In an embodiment of the present disclosure, a UWB technology is taken as an example for description. In practice, the Bluetooth technology, the WIFI technology, or other wireless technologies may be used instead of the UWB technology. UWB is a carrier-free communication technology. With the UWB technology, data is transmitted using nanosecond to picosecond non-sinusoidal narrow pulses. With the UWB technology, signals with extremely low powers are transmitted based on a wide frequency spectrum, thus a data transmission rate of hundreds of Mbits/s to several Gbits/s can be achieved in a region having a radius of about 10 meters. With the UWB technology, a positioning accuracy of up to 10cm can be achieved. The positioning performed indoor with the UWB technology has the following features: 1 having a frequency ranging from 3.1Ghz to 10.6GHz and a bandwidth greater than 500MHz; 2 expressed as extremely short (less than 2nS) pulses in the time domain; 3 having good coexistence with other wireless devices; 4 having a low power consumption and a low emission duty cycle; 5 insensitive to Rayleigh fading; and 6 having strong penetrability and having a high positioning accuracy.

As shown in Figure 3, each of the communication units 1 may include a communication tag and an antenna. In the vehicle positioning device, a tag-side solving solution may be used. After the antenna receives the signals from the signal transmitting units, the signals are transmitted to the tag to perform a synchronization algorithm to obtain time information. The time information is transmitted via a serial port or a CAN to a solving unit (not shown in Figure 3) to determine coordinates, and then the coordinates are transmitted to the processing unit 2 via the CAN or a serial port or by using other wired or wireless transmission technology. Alternatively, the solving unit may be integrated with the processing unit 2 to perform the calculation in the processing unit 2. The antenna and the tag may be integrated together or arranged separately. Antenna 1 and antenna 2 may be arranged in one structure or be arranged separately, and the two antennas are required to be spaced apart. The heading angle of the vehicle may be calculated based on the coordinates of the antennas, thereby controlling a wire control system, such as a steering angle, of the vehicle.

A vehicle positioning system is further provided according to an embodiment of the present disclosure. Figure 4 is a schematic structural diagram of a vehicle positioning system according to an embodiment of the present disclosure. As shown in Figure 4, the vehicle positioning system includes: the vehicle positioning device 4 described above, a vehicle-mounted positioning device 5 and a master control device 6. The vehicle-mounted positioning device 5 is configured to collect information of a position and/or a heading angle of a vehicle. The master control device 6 is configured to: calculate the position and/or the heading angle of the vehicle by using the vehicle positioning device 4 in a case that two or more communication units 1 have received signals from multiple signal transmitting devices; and calculate the position and/or the heading angle of the vehicle based on the information of the position and/or the heading angle of the vehicle collected by the vehicle-mounted positioning device 5 in a case that any one of two or more communication units 1 has not received a signal from any one of multiple signal transmitting devices.

In the embodiment of the present disclosure, the vehicle-mounted positioning device 5 is arranged to perform vision positioning. In the vehicle positioning system according to the embodiment, positioning is mainly performed by the vehicle positioning device 4, and the vehicle-mounted positioning device 5 is configured to perform positioning and operations in a case of the failure of the vehicle positioning device 4, obstacle identification, and obstacle avoidance. In this solution, a base station is arranged in the parking lot, and dual tags are arranged on the vehicle. The solution is applied in a scenario in which all vehicles in the parking lot are arranged with tags and communicate with the base station in the parking lot, and information are transmitted back to a parking lot management system and other vehicles through a wireless network. That is, the environment is simple. The parking lot management system performs unified dispatch and route planning for the vehicles. Based on the UWB positioning technology, information of the heading angle, and vehicle control models, the vehicle is parked. In addition, obstacle avoidance and local path planning are performed based on a solution of vision and radar in the travelling of the vehicle.

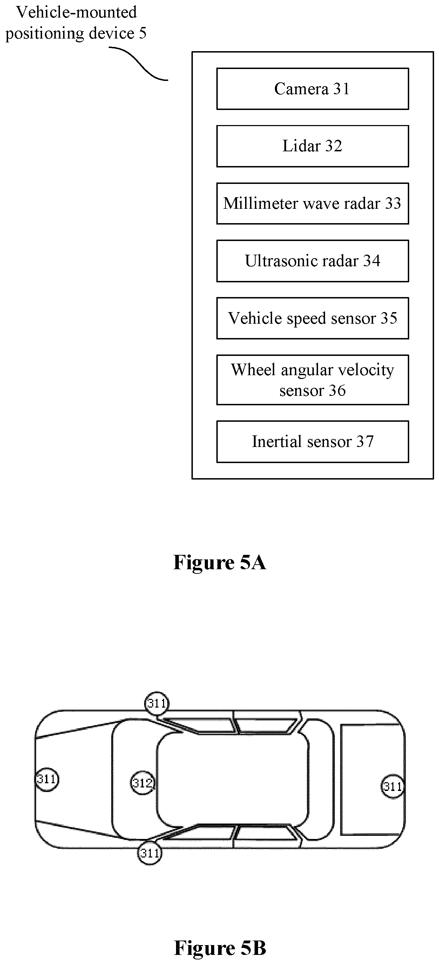

Figure 5A is a schematic structural diagram of a vehicle-mounted positioning device according to an embodiment of the present disclosure. As shown in Figure 5A, the vehicle-mounted positioning device 5 includes at least one of a camera 31, a lidar 32, a millimeter wave radar 33, an ultrasonic radar 34, a vehicle speed sensor 35, a wheel angular velocity sensor 36 and an inertial sensor 37. The millimeter wave radar 33 is used for obstacle avoidance. With the ultrasonic radar 34, parking of vehicles is performed based on the solution of vision and radar. With the vehicle speed sensor 35, the wheel angular velocity sensor 36, and the inertial sensor 37, various states, such as a vehicle speed, a wheel speed, an acceleration, a tilt, a shock, a vibration, a rotation, and a multi-degree-of-freedom motion, of the vehicle may be obtained.

Figure 5B is a schematic diagram showing arrangement positions of vehicle-mounted cameras according to an embodiment of the present disclosure. As shown in Figure 5B, the vehicle-mounted cameras 31 may include a surround view camera 311, a front view camera 312 and the like to completely capture images around the vehicle. The master control unit 2 uses a high-precision map and/or a semantic map collected by a vehicle sensor, the surround view camera 311 and the front view camera 312. In the solution of vision positioning, based on a semantic map generated based on a vision synchronous localization and mapping (VSLAM) and the high-precision map, VSLAM feature points identified and collected by the vehicle-mounted camera 31 are matched, then the vehicle is positioned based on information of the inertial sensor 37 (IMU), thereby obtaining vehicle-side positioning information. SLAM (simultaneous localization and mapping) is a process of constructing an environmental map while calculating a position based on information of a sensor, thereby solving the problem of positioning and map construction when moving in an unknown environment. VSLAM is a vision SLAM, which is advanced. In the VSLAM, positioning and map construction is performed based on vision, which is accurate and rapid.

In addition, in an embodiment of the present disclosure, multiple signal transmitting units may be arranged in certain regions to save costs to control the signals transmitted from the multiple signal transmitting units to cover a region around a turn, a region around a corner, a region around a transparent glass, or a region having feature points not sufficient for the vehicle-mounted positioning device 5 to correctly position the vehicle.

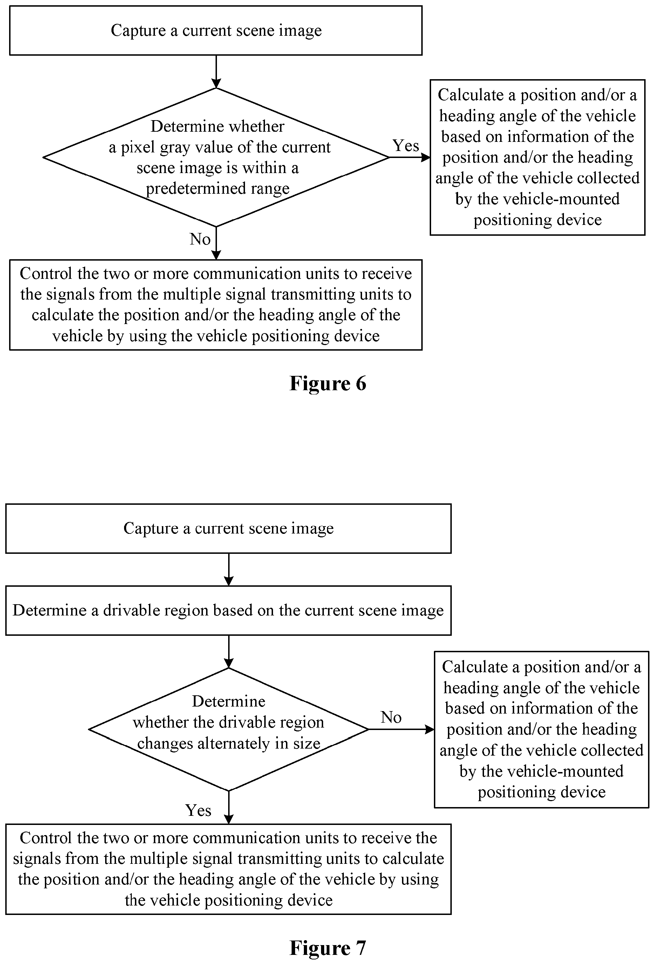

Figure 6 is a schematic diagram of an operation process of a vehicle positioning system according to the invention. As shown in Figure 6, for regions with bright or dark light, such as a region around a corner and a region around a transparent glass, the vehicle positioning system according to the embodiment of the present disclosure operates as follows. A current scene image is captured. It is determined whether a pixel gray value of the current scene image is within a predetermined range. In a case that the pixel gray value of the current scene image is not within the predetermined range, the two or more communication units 1 are controlled to receive the signals from the multiple signal transmitting units to calculate the position and/or the heading angle of the vehicle by using the vehicle positioning device 4. In a case that the pixel gray value of the current scene image is within the predetermined range, the position and/or the heading angle of the vehicle is calculated based on the information of the position and/or the heading angle of the vehicle collected by the vehicle-mounted positioning device 5.

Figure 7 is a schematic diagram of an operation process of a vehicle positioning system according to another embodiment of the present disclosure. As shown in Figure 7, for a region around a turn, the vehicle positioning system according to the embodiment of the present disclosure operates as follows. A current scene image is captured, and a drivable region is determined based on the current scene image. It is determined whether the drivable region changes alternately in size in the driving of the vehicle. In a case that the drivable region changes alternately in size, the two or more communication units 1 are controlled to receive the signals from the multiple signal transmitting units to calculate the position and/or the heading angle of the vehicle by using the vehicle positioning device 4. In a case that the drivable region does not change alternately in size, the position and/or the heading angle of the vehicle is calculated based on the information of the position and/or the heading angle of the vehicle collected by the vehicle-mounted positioning device 5.

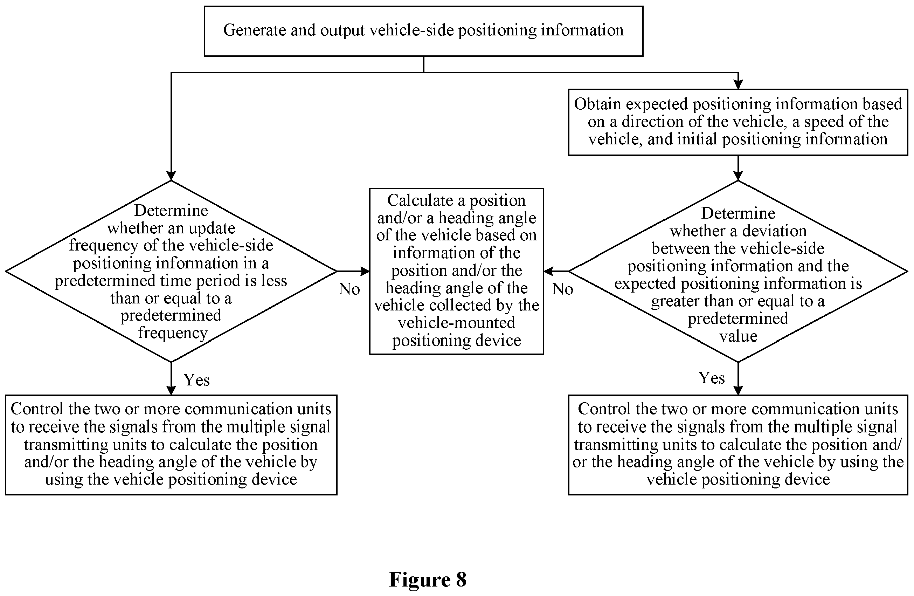

Figure 8 is a schematic diagram of an operation process of a vehicle positioning system according to another embodiment of the present disclosure. As shown in Figure 8, for a region having feature points not sufficient for the vehicle-mounted positioning device 5 to correctly position the vehicle, the vehicle positioning system according to the embodiment of the present disclosure operates as follows. The vehicle positioning device 5 generates and outputs vehicle-side positioning information. Then, one of the following steps 1 and 2 is performed.

In step 1, expected positioning information is obtained based on a direction of the vehicle, a speed of the vehicle, and initial positioning information. It is determined whether a deviation between the vehicle-side positioning information and the expected positioning information is greater than or equal to a predetermined value in the driving of the vehicle. In a case that the deviation between the vehicle-side positioning information and the expected positioning information is greater than or equal to the predetermined value, that is, the vehicle has entered the region having insufficient feature points, the two or more communication units 1 are controlled to receive the signals from the multiple signal transmitting units to calculate the position and/or the heading angle of the vehicle by using the vehicle positioning device 4. In a case that the deviation between the vehicle-side positioning information and the expected positioning information is less than a predetermined value, that is, the vehicle has not entered the region having insufficient feature points, the position and/or the heading angle of the vehicle may be calculated based on the information of the position and/or the heading angle of the vehicle collected by the vehicle-mounted positioning device 5.

In step 2, it is determined in the driving of the vehicle whether an update frequency of the vehicle-side positioning information in a predetermined time period is less than or equal to a predetermined frequency. In a case that the update frequency of the vehicle-side positioning information in the predetermined period is less than or equal to the predetermined frequency, that is, the vehicle has entered the region having insufficient feature points, the two or more communication units 1 are controlled to receive the signals from the multiple signal transmitting units to calculate the position and/or the heading angle of the vehicle by using the vehicle positioning device 4. In a case that the update frequency of the vehicle-side positioning information in the predetermined period is greater than the predetermined frequency, that is, the vehicle has not entered the region having insufficient feature points, the position and/or the heading angle of the vehicle may be calculated based on the information of the position and/or the heading angle of the vehicle collected by the vehicle-mounted positioning device 5.

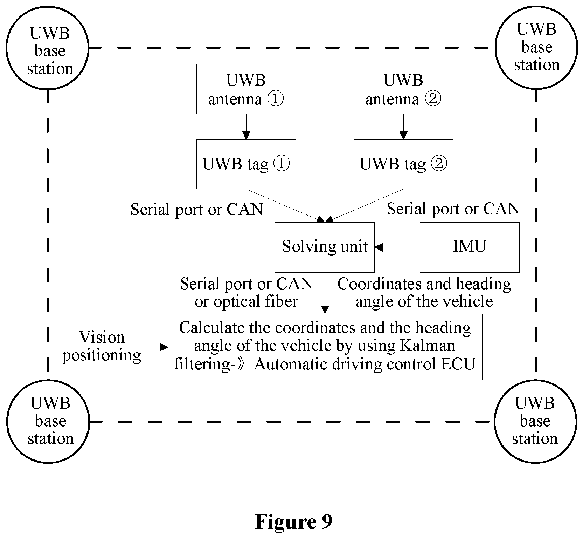

Figure 9 is a block diagram showing an operation of a vehicle positioning system according to an embodiment of the present disclosure. As shown in Figure 9, after the antenna receives a signal from a base station, the signal is transmitted to a tag to perform a synchronization algorithm to obtain time information. The time information is transmitted via a serial port or a CAN to a solving unit to determine position coordinates. Then, the coordinates are transmitted to the master control unit via a serial port, a CAN, a network cable, an optical fiber, or the like.

Based on the vehicle-side positioning solution (based on VSLAM, high-precision map and lidar) and the field-side high-precision UWB positioning solution, precise positioning (with a positioning error of 10cm and a yaw angle error of 0.2°) is performed. Based on the above two positioning solutions and the Kalman filtering, the final coordinates and heading angle of the vehicle are outputted in a way of evaluating confidence. The UWB positioning solution is less affected by the environment, and the vision positioning solution is easily interfered by light. Therefore, the vision positioning solution is mainly applied in scenarios with good light, and the UWB positioning solution is mainly applied in scenarios with poor light. The vision positioning solution is performed based on a high-precision map, an ultrasonic radar, a surround-view fisheye camera, a front view camera, a millimeter wave radar, sensors (such as a speed sensor and a wheel angular velocity sensor) arranged on the vehicle, an IMU and multiple low-cost sensors. The vision positioning solution is based on a high-precision map and a semantic map generated based on VSLAM.

In the embodiment of the present disclosure, a low-cost vehicle-side positioning solution and a low-cost field-side positioning solution are combined, overcoming the shortcomings of the vision positioning solution easily affected by light, and thereby ensuring reliability. Furthermore, with the vehicle-side positioning solution and the field-side positioning solution according to the embodiment of the present disclosure, it is ensured that there is a redundant backup solution in a case that one of the solutions fails, thereby improving the safety of the entire system.

A vehicle positioning method is further provided according to an embodiment of the present disclosure. The vehicle positioning method is performed based on multiple signal transmitting units and two or more communication units. The vehicle positioning method includes the following operations. The two or more communication units receive signals from the multiple signal transmitting units. The two or more communication units are spaced apart. For each of the two or more communication units, coordinates of the communication unit are determined based on time instants at which the communication unit receives the signals from the multiple signal transmitting units and coordinates of the signal transmitting units. A heading angle of the vehicle is determined based on the coordinates of each of the communication units.

Further, in determining, for each of the two or more communication units, coordinates of the communication unit based on time instants at which the communication unit receives the signals from the multiple signal transmitting units and coordinates of the signal transmitting units, following operations are performed. For each of the communication units, distances between the communication unit and the signal transmitting units are determined based on the time instants at which the communication unit receives the signals from the signal transmitting units. The coordinates of the communication unit are determined based on the coordinates of the signal transmitting units and the distances between the communication unit and the signal transmitting units.

Further, the vehicle positioning method is performed based on a gyroscope. The vehicle positioning method includes the following operations. The gyroscope detects a heading angle of the vehicle as a first heading angle. Based on a driving curve of the vehicle, a heading angle of the vehicle is calculated as a second heading angle. A final heading angle of the vehicle is and determined using an autoregressive algorithm based on the first heading angle, the second heading angle, and the heading angle of the vehicle determined based on the coordinates of each of the communication devices.

Further, each of the communication units includes a communication tag and an antenna.

Further, the method includes the following operation. Coordinates of the vehicle are calculated to obtain a position of the vehicle based on coordinates of any one of the two or more communication units and a position at which the communication unit is arranged on the vehicle.

Further, the signals from the multiple signal transmitting units cover at least one of a region around a turn, a region around a corner, a region around a transparent glass, and a region having feature points not sufficient for a vehicle-mounted positioning device to correctly position the vehicle.

A machine-readable storage medium is further provided according to an embodiment of the present disclosure. The machine-readable storage medium stores instructions. The instructions, when executed by a machine, cause the machine to perform the vehicle positioning method.

A processor is further provided according to an embodiment of the present disclosure. The processor is configured to execute a program. The program, when executed by the processor, causes the processor to perform the vehicle positioning method.

A vehicle is further provided according to an embodiment of the present disclosure. The vehicle includes the vehicle positioning device or the vehicle positioning system.

Embodiments of the vehicle positioning method, the machine-readable storage medium, the processor and the vehicle are similar to the embodiments of the vehicle positioning device and the vehicle positioning system, which are not repeated herein.

The foregoing embodiments are merely preferred embodiments of the present disclosure and are not intended to limit the present disclosure.

## Claims

1. A vehicle positioning system, comprising
a vehicle-mounted positioning device (5), configured to collect information of the position and/or the heading angle of the vehicle based on a current scene image captured by the vehicle-mounted positioning device (5);
a vehicle positioning device (4), operating based on signals received wirelessly from a plurality of signal transmitting units external to the vehicle; and
a master control device;
wherein the vehicle positioning device comprises:
two or more communication units (1), arranged on the vehicle and configured to receive signals from the plurality of signal transmitting units, wherein the two or more communication units (1) are spaced apart; and
a processing unit (2), configured to:
determine, for each of the two or more communication units (1), coordinates of the communication unit based on time instants at which the communication unit (1) receives the signals from the signal transmitting units and coordinates of the signal transmitting units (1), and
determine a heading angle of the vehicle based on the coordinates of each of the communication units (1),
wherein the master control device (6) is configured to:
in a case that two or more communication units (1) have received signals from a plurality of signal transmitting devices, calculate, by the vehicle positioning device (4), the position and/or the heading angle of the vehicle; and
**characterized in that**
in a case that any one of two or more communication units (1) has not received a signal from any one of a plurality of signal transmitting devices, calculate the position and/or the heading angle of the vehicle based on the information of the position and/or the heading angle of the vehicle collected by the vehicle-mounted positioning device (5),
wherein the master control device (6) is further configured to:
determine whether a pixel gray value of the current scene image is within a predetermined range before the two or more communication units (1) receive the signals from the plurality of signal transmitting devices;
in a case that the pixel gray value of the current scene image is not within the predetermined range, control the two or more communication units (1) to receive the signals from the plurality of signal transmitting units to calculate the position and/or the heading angle of the vehicle by using the vehicle positioning device (4); and
in a case that the pixel gray value of the current scene image is within the predetermined range, calculate the position and/or the heading angle of the vehicle based on the information of the position and/or the heading angle of the vehicle collected by the vehicle-mounted positioning device (5).

2. The vehicle positioning system according to claim 1, wherein determining, for each of the two or more communication units (1), coordinates of the communication unit (1) based on time instants at which the communication unit (1) receives the signals from the signal transmitting units and coordinates of the signal transmitting units is performed by:
for each of the two or more communication units (1),
determining distances between the communication unit and the signal transmitting units based on the time instants at which the communication unit (1) receives the signals from the signal transmitting units; and
determining the coordinates of the communication unit based on the coordinates of the signal transmitting units and the distances between the communication unit (1) and the signal transmitting units.

3. The vehicle positioning system according to claim 1, wherein each of the communication units (1) comprises a communication tag and an antenna.

4. The vehicle positioning system according to claim 1, wherein the processing unit (2) is further configured to:
calculate coordinates of the vehicle to obtain a position of the vehicle based on coordinates of any one of the two or more communication units (1) and a position at which the communication unit (1) is arranged on the vehicle.

5. The vehicle positioning system according to claim 1, wherein the vehicle-mounted positioning device (5) comprises at least one of a camera, a lidar, a millimeter wave radar, an ultrasonic radar, a vehicle speed sensor, a wheel angular velocity sensor and an inertial sensor.

6. A vehicle positioning method, performed by a vehicle positioning system and performed based on signals received wirelessly from a plurality of signal transmitting units external to a vehicle by two or more communication units of a vehicle positioning device (4) comprised in the vehicle positioning system, wherein the vehicle positioning method comprises:
capturing a current scene image by a vehicle-mounted positioning device comprised in the vehicle positioning system;
**characterized in**
determining whether a pixel gray value of the current scene image is within a predetermined range; and
in a case that the pixel gray value of the current scene image is not within the predetermined range:
- receiving, by the two or more communication units (1) using a wireless technology, signals from the plurality of signal transmitting units, wherein the two or more communication units (1) are spaced apart;
- determining, for each of the two or more communication units (1), coordinates of the communication unit (1) based on time instants at which the communication unit receives the signals from the signal transmitting units and coordinates of the signal transmitting units; and
- determining a heading angle of the vehicle based on the coordinates of each of the communication units (1); and
in a case that the pixel gray value of the current scene image is within the predetermined range:
- calculating the position and/or the heading angle of the vehicle based on the information collected by a camera of the vehicle-mounted positioning device and at least one of a lidar, a millimeter wave radar, an ultrasonic radar, a vehicle speed sensor, a wheel angular velocity sensor and an inertial sensor of the vehicle-mounted positioning device.

7. The vehicle positioning method according to claim 6, wherein the determining, for each of the two or more communication units (1), coordinates of the communication unit (1) based on time instants at which the communication unit (1) receives the signals from the signal transmitting units and coordinates of the signal transmitting units comprises:
for each of the two or more communication units (1),
determining distances between the communication unit (1) and the signal transmitting units based on the time instants at which the communication unit (1) receives the signals from the signal transmitting units; and
determining the coordinates of the communication unit (1) based on the coordinates of the signal transmitting units and the distances between the communication unit and the signal transmitting units.

8. The vehicle positioning method according to claim 6, further comprising:
calculating coordinates of the vehicle to obtain a position of the vehicle based on coordinates of any one of the two or more communication units (1) and a position at which the communication unit (1) is arranged on the vehicle.

9. A vehicle, comprising the vehicle positioning system according to any one of claims 1 to 5.

## Patentansprüche

1. Fahrzeugortungssystem, umfassend
eine fahrzeugmontierte Positionierungsvorrichtung (5), die dazu konfiguriert ist, Informationen über die Position und/oder den Kurswinkel des Fahrzeugs auf Grundlage eines aktuellen Szenenbilds, das von der fahrzeugmontierten Positionierungsvorrichtung (5) erfasst wird, zu sammeln
eine Fahrzeugpositionierungsvorrichtung (4), die auf Grundlage von Signalen arbeitet, die drahtlos von einer Vielzahl von außerhalb des Fahrzeugs angeordneten Signalübertragungseinheiten empfangen werden; und
eine Hauptsteuervorrichtung;
wobei die Fahrzeugpositionierungsvorrichtung umfasst:
zwei oder mehr Kommunikationseinheiten (1), die an dem Fahrzeug angeordnet sind und dazu konfiguriert sind. Signale von der Vielzahl von Signalübertragungseinheiten empfangen, wobei die zwei oder mehr Kommunikationseinheiten (1) voneinander beabstandet sind; und
eine Verarbeitungseinheit (2), die dazu konfiguriert ist,
Koordinaten der Kommunikationseinheit, für jede der zwei oder mehr Kommunikationseinheiten (1), auf Grundlage von Zeitpunkten, zu denen die Kommunikationseinheit (1) die Signale von den Signalübertragungseinheiten empfängt, und auf Grundlage von Koordinaten der Signalübertragungseinheiten (1), zu bestimmen und
einen Kurswinkel des Fahrzeugs auf Grundlage der Koordinaten jeder der Kommunikationseinheiten (1) zu bestimmen,
wobei das Hauptsteuergerät (6) dazu konfiguriert ist,
die Position und/oder den Kurswinkel des Fahrzeugs in einem Fall, in welchem zwei oder mehr Kommunikationseinheiten (1) Signale von einer Vielzahl von Signalübertragungsvorrichtungen empfangen haben, mittels der Fahrzeugpositionierungsvorrichtung (4) zu berechnen; und **dadurch gekennzeichnet, dass**
in einem Fall, in dem eine der zwei oder mehr Kommunikationseinheiten (1) kein Signal von einer der mehreren Signalübertragungsvorrichtungen empfangen hat, die Position und/oder der Kurswinkel des Fahrzeugs auf der Grundlage der Information über die Position und/oder den Kurswinkel des Fahrzeugs berechnet wird, die von der fahrzeugmontierten Positionierungsvorrichtung (5) gesammelt wurde.
wobei die Hauptsteuervorrichtung (6) ferner dazu konfiguriert ist. um
zu bestimmen, ob ein Pixel-Grauwert des aktuellen Szenenbildes innerhalb eines vorbestimmten Bereichs liegt, bevor die zwei oder mehr Kommunikationseinheiten (1) die Signale von der Vielzahl von Signalübertragungsvorrichtungen empfangen;
die zwei oder mehr Kommunikationseinheiten (1), in einem Fall, in welchem der Pixelgrauwert des aktuellen Szenenbildes nicht innerhalb des vorbestimmten Bereichs liegt, anzusteuern, um die Signale von der Vielzahl von Signalübertragungseinheiten zu empfangen, um die Position und/oder den Kurswinkel des Fahrzeugs unter Verwendung der Fahrzeugpositionierungsvorrichtung (4) zu berechnen; und
die Position und/oder den Kurswinkel des Fahrzeugs in einem Fall, in welchem der Pixelgrauwert des aktuellen Szenenbildes innerhalb des vorbestimmten Bereichs liegt, basierend auf der Information der Position und/oder des Kurswinkels des Fahrzeugs zu berechnen, die von der fahrzeugmontierten Positionierungsvorrichtung (5) gesammelt wurde.

2. Fahrzeugortungssystem nach Anspruch 1, wobei die Bestimmung der Koordinaten der Kommunikationseinheit (1), für jede der zwei oder mehr Kommunikationseinheiten (1), auf Grundlage der Zeitpunkte, an denen die Kommunikationseinheit (1) die Signale von den Signalübertragungseinheiten empfängt, und von Koordinaten der Signalübertragungseinheiten dadurch durchgeführt wird, dass
für jede der zwei oder mehr Kommunikationseinheiten (1),
Abstände zwischen der Kommunikationseinheit und den Signalübertragungseinheiten auf der Grundlage der Zeitpunkte, zu denen die Kommunikationseinheit (1) die Signale von den Signalübertragungseinheiten empfängt, bestimmt werden; und
Koordinaten der Kommunikationseinheit auf der Grundlage der Koordinaten der Signalübertragungseinheiten und der Abstände zwischen der Kommunikationseinheit (1) und den Signalübertragungseinheiten bestimmt werden.

3. Fahrzeugortungssystem nach Anspruch 1, wobei jede der Kommunikationseinheiten (1) ein Kommunikationskennzeichen und eine Antenne umfasst.

4. Fahrzeugortungssystem nach Anspruch 1, wobei die Verarbeitungseinheit (2) ferner konfiguriert ist, um:
Koordinaten des Fahrzeugs zu berechnen, um eine Position des Fahrzeugs auf Grundlage von Koordinaten einer der zwei oder mehr Kommunikationseinheiten (1) und einer Position, an der die Kommunikationseinheit (1) am Fahrzeug angeordnet ist. zu erhalten.

5. Fahrzeugortungssystem nach Anspruch 1, wobei die fahrzeugmontierte Ortungsvorrichtung (5) mindestens eine Kamera, ein Lidar, ein Millimeterwellenradar, ein Ultraschallradar, einen Fahrzeuggeschwindigkeitssensor, einen Radwinkelsensor und einen Inertialsensor umfasst.

6. Fahrzeugortungsverfahren, das von einem Fahrzeugortungssystem durchgeführt wird und auf der Grundlage von Signalen durchgeführt wird, die drahtlos von einer Vielzahl von außerhalb eines Fahrzeugs angeordneten Signalübertragungseinheiten mittels zwei oder mehr Kommunikationseinheiten einer Fahrzeugpositionierungsvorrichtung (4) empfangen werden, die in dem Fahrzeugortungssystem enthalten ist.
wobei das Fahrzeugortungsverfahren umfasst:
Erfassen eines aktuellen Szenenbildes durch eine fahrzeugmontiertc Positionierungsvorrichtung, die in dem Fahrzeugortungssystem enthalten ist;
**gekennzeichnet, durch**
Bestimmen, ob ein Pixelgrauwert des aktuellen Szenenbildes innerhalb eines vorbestimmten Bereichs liegt; und
in einem Fall, in dem der Pixelgrauwert des aktuellen Szenenbildes nicht innerhalb des vorbestimmten Bereichs liegt:
- Empfangen, durch die zwei oder mehr Kommunikationseinheiten (1) unter Verwendung einer drahtlosen Technologie, von Signalen von der Vielzahl von Signalübertragungseinheiten, wobei die zwei oder mehr Kommunikationseinheiten (1) voneinander beabstandet sind;
- Bestimmen, für jede der zwei oder mehr Kommunikationseinheiten (1). von Koordinaten der Kommunikationseinheit (1) auf der Grundlage von Zeitpunkten, zu denen die Kommunikationseinheit die Signale von den Signalübertragungseinheiten empfängt, und von Koordinaten der Signalübertragungseinheiten; und
- Bestimmen eines Kurswinkels des Fahrzeugs basierend auf den Koordinaten jeder der Kommunikationseinheiten (1): und
für den Fall, dass der Pixelgrauwert des aktuellen Szenenbildes innerhalb des vorbestimmten Bereichs liegt:
- Berechnen der Position und/oder des Kurswinkels des Fahrzeugs basierend auf den Informationen, die von einer Kamera der fahrzeugmontierten Positionierungsvorrichtung und mindestens einem Lidar, einem Millimeterwellenradar, einem Ultraschallradar. einem Fahrzeuggeschwindigkeitssensor, einem Radwinkelsensor und einem Trägheitssensor der fahrzeugmontierten Ortungsvorrichtung erfasst werden.

7. Fahrzeugortungsverfahren nach Anspruch 6, wobei das Bestimmen der Koordinaten der Kommunikationseinheit (1), für jede der zwei oder mehr Kommunikationseinheiten (1). auf der Grundlage von Zeitpunkten, zu denen die Kommunikationseinheit (1) die Signale von den Signalübertragungseinheiten empfängt, und von Koordinaten der Signalübertragungseinheiten umfasst:
für jede der zwei oder mehr Kommunikationseinheiten (1),
Bestimmen von Abständen zwischen der Kommunikationseinheit (1) und den Signalübertragungseinheiten auf der Grundlage der Zeitpunkte, zu denen die Kommunikationseinheit (1) die Signale von den Signalübertragungseinheiten empfängt; und
Bestimmen der Koordinaten der Kommunikationseinheit (1) auf der Grundlage der Koordinaten der Signalübertragungseinheiten und der Abstände zwischen der Kommunikationseinheit und den Signalübertragungseinheiten.

8. Fahrzeugortungsverfahren nach Anspruch 6, ferner umfassend:
Berechnen von Koordinaten des Fahrzeugs, um eine Position des Fahrzeugs auf der Grundlage von Koordinaten einer der zwei oder mehr Kommunikationseinheiten (1) und einer Position, an der die Kommunikationseinheit (1) am Fahrzeug angeordnet ist. zu erhalten.

9. Fahrzeug, umfassend das Fahrzeugortungssystem nach einem der Ansprüche 1 bis 5.

## Revendications

1. Système de positionnement de véhicule, comprenant :
un dispositif de positionnement embarqué dans un véhicule (5) configuré pour recueillir des informations sur la position et/ou l'angle de cap du véhicule sur la base d'une image de scène actuelle capturée par le dispositif de positionnement embarqué dans un véhicule (5) ;
un dispositif de positionnement de véhicule (4), fonctionnant sur la base de signaux reçus sans fil d'une pluralité d'unités de transmission de signaux externes au véhicule, et
un dispositif de commande maître ;
dans lequel le dispositif de positionnement de véhicule comprend :
deux unités de communication (1), ou plus, agencées sur le véhicule et configurées pour recevoir des signaux de la pluralité d'unités de transmission de signaux, dans lequel les deux unités de communication ou plus (1) sont espacées les unes des autres, et
une unité de traitement (2) configurée pour :
déterminer, pour chacune des deux unités de communication (1), ou plus, des coordonnées de l'unité de communication sur la base d'instants temporels auxquels l'unité de communication (1) reçoit les signaux des unités de transmission de signaux et des coordonnées des unités de transmission de signaux (1), et
déterminer un angle de cap du véhicule sur la base des coordonnées de chacune des unités de communication (1),
dans lequel le dispositif de commande maître (6) est configuré pour :
dans un cas où deux unités de communication (1), ou plus, ont reçu des signaux d'une pluralité de dispositifs de transmission de signaux, calculer, par le dispositif de positionnement de véhicule (4), la position et/ou l'angle de cap du véhicule, et
**caractérisé en ce que**
dans un cas où l'une quelconque des deux unités de communication (1), ou plus. n'a pas reçu de signal de l'un quelconque d'une pluralité de dispositifs de transmission de signaux, calculer la position et/ou l'angle de cap du véhicule sur la base des informations de la position et/ou de l'angle de cap du véhicule recueillies par le dispositif de positionnement embarqué dans un véhicule (5),
dans lequel le dispositif de commande maître (6) est en outre configuré pour :
déterminer si oui ou non une valeur de gris de pixel de l'image de scène actuelle est comprise dans les limites d'une plage prédéterminée avant que les deux unités de communication (1), ou plus, ne reçoivent les signaux de la pluralité de dispositifs de transmission de signaux ;
dans un cas où la valeur de gris de pixel de l'image de scène actuelle n'est pas comprise dans les limites de la plage prédéterminée, commander les deux unités de communication (1), ou plus, pour recevoir les signaux de la pluralité d'unités de transmission de signaux pour calculer la position et/ou l'angle de cap du véhicule à l'aide du dispositif de positionnement de véhicule (4), et
dans un cas où la valeur de gris de pixel de l'image de scène actuelle est comprise dans les limites de la plage prédéterminée, calculer la position et/ou l'angle de cap du véhicule sur la base des informations sur la position et/ou l'angle de cap du véhicule recueillies par le dispositif de positionnement embarqué dans un véhicule (5).

2. Système de positionnement de véhicule selon la revendication 1, dans lequel la détermination, pour chacune des deux unités de communication (1), ou plus, des coordonnées de l'unité de communication (1) sur la base des instants temporels auxquels l'unité de communication (1) reçoit les signaux des unités de transmission de signaux, et des coordonnées des unités de transmission de signaux est réalisée en :
pour chacune des deux unités de communication (1), ou plus,
déterminant des distances entre l'unité de communication et l'unité de transmission de signaux sur la base des instants temporels auxquels l'unité de communication (1) reçoit les signaux des unités de transmission de signaux, et
déterminant les coordonnées de l'unité de communication sur la base des coordonnées des unités de transmission de signaux et des distances entre l'unité de communication (1) et les unités de transmission de signaux.

3. Système de positionnement de véhicule selon la revendication 1, dans lequel chacune des unités de communication (1) comprend une balise de communication et une antenne.

4. Système de positionnement de véhicule selon la revendication 1, dans lequel l'unité de traitement (2) est en outre configurée pour :
calculer des coordonnées du véhicule afin d'obtenir une position du véhicule sur la base des coordonnées de l'une quelconque des deux unités de communication (1), ou plus, et une position sur laquelle l'unité de communication (1) est agencée sur le véhicule.

5. Système de positionnement de véhicule selon la revendication 1, dans lequel le dispositif de positionnement embarqué dans un véhicule (5) comprend au moins un élément parmi : une caméra, un lidar, un radar à ondes millimétriques, un radar à ultrasons, un capteur de vitesse de véhicule, un capteur de vitesse angulaire de roue, et un capteur inertiel.

6. Procédé de positionnement de véhicule réalisé par un système de positionnement de véhicule et réalisé sur la base de signaux reçus sans fil d'une pluralité d'unités de transmission de signaux externes à un véhicule, par deux unités de communication ou plus d'un dispositif de positionnement de véhicule (4) compris dans le système de positionnement de véhicule,
dans lequel le procédé de positionnement de véhicule comprend les étapes suivantes :
capturer une image de scène actuelle par un dispositif de positionnement embarqué dans un véhicule compris dans le système de positionnement de véhicule ;
**caractérisé par** les étapes suivantes :
déterminer si oui ou non une valeur de gris de pixel de l'image de scène actuelle est comprise dans les limites d'une plage prédéterminée, et dans un cas où la valeur de gris de pixel de l'image de scène actuelle n'est pas comprise dans les limites de la plage prédéterminée,
- recevoir, par les deux unités de communication (1), ou plus, à l'aide d'une technologie sans fil, des signaux de la pluralité d'unités de transmission de signaux, dans lequel les deux unités de communication ou plus (1) sont espacées les unes des autres ;
- déterminer, pour chacune des deux unités de communication (1), ou plus, des coordonnées de l'unité de communication (1) sur la base d'instants temporels auxquels l'unité de communication reçoit les signaux des unités de transmission de signaux et des coordonnées des unités de transmission de signaux, et
- déterminer un angle de cap du véhicule sur la base des coordonnées de chacune des unités de communication (1), et
dans un cas où la valeur de gris de pixel de l'image de scène actuelle est comprise dans les limites de la plage prédéterminée,
- calculer la position et/ou l'angle de cap du véhicule sur la base des informations recueillies par une caméra du dispositif de positionnement embarqué dans un véhicule, et au moins un des éléments suivants parmi un lidar, un radar à ondes millimétriques, un radar à ultrasons, un capteur de vitesse de véhicule, un capteur de vitesse angulaire de roue, et un capteur inertiel du dispositif de positionnement embarqué dans un véhicule.

7. Procédé de positionnement de véhicule selon la revendication 6, dans lequel la détermination, pour chacune des deux unités de communication (1), ou plus, des coordonnées de l'unité de communication (1) sur la base des instants temporels auxquels l'unité de communication (1) reçoit les signaux des unités de transmission de signaux et des coordonnées des unités de transmission de signaux comprend les étapes suivantes :
pour chacune des deux unités de communication (1), ou plus,
déterminer des distances entre l'unité de communication (1) et les unités de transmission de signaux sur la base des instants temporels auxquels l'unité de communication (1) reçoit les signaux des unités de transmission de signaux, et
déterminer les coordonnées de l'unité de communication (1) sur la base des coordonnées des unités de transmission de signaux et les distances entre l'unité de communication et les unités de transmission de signaux.

8. Procédé de positionnement de véhicule selon la revendication 6, comprenant en outre l'étape suivante :
calculer des coordonnées du véhicule afin d'obtenir une position du véhicule sur la base des coordonnées de l'une quelconque des deux unités de communication (1), ou plus, et une position sur laquelle l'unité de communication (1) est agencée sur le véhicule.

9. Véhicule, comprenant système de positionnement de véhicule selon l'une quelconque des revendications 1 à 5.
